# EUROPEAN PATENT APPLICATION

(11) **EP 4 450 297 A1**
(43) Date of publication of application: **23.10.2024**
(21) Application number: 23169238.5
(22) Date of filing: 21.04.2023
(51) Int. Cl.: B60C 9/00, B60C 9/11, B60C 9/02

(54) **PNEUMATIC TIRE AND BODY PLY FOR A PNEUMATIC TIRE**

(71) Applicant: Bridgestone Europe NV/SA, 1930 Zaventem (BE)
(72) Inventor: Colletti, Marco, 00128 Roma (IT)
(74) Representative: Marchetti, Alessio

(57) **Abstract**

The invention relates to a pneumatic tire, in particular a relatively low weight high performance tire , having a toroidal carcass with at least one body ply, the at least one body ply comprising a fabric comprising a cord having a tensile strength of at least 240 N, preferably at least 245 N.

## Description

### TECHNICAL FIELD

The invention relates to a pneumatic tire, in particular a relatively low weight high performance tire, such as a tire for sports cars, having a toroidal carcass with at least one body ply which body ply comprises a fabric, typically embedded in a rubber matrix.

### BACKGROUND

US 2012/012238 discloses a pneumatic tire carcass having at least one body ply of stabilizing fabric. A plurality of high tenacity reinforcing yarn elements or cords are disposed in the cross-machine direction. In an example, the reinforcing cords may be standard HMLS polyester with two cabled plies having constructions of 1670/2 (3340 decitex); 1440/2 (2880 decitex); or 1100/2 (2200 decitex). The fibers forming the reinforcing cords may be pre-treated by drawing to substantially eliminate stretch in the final yarn and are treated with an adhesion promoter such as RFL or the like prior to fabric formation. The reinforcing cords may also be subjected to stretching to impart added strength after fabric formation.

### SUMMARY

It is an object of the present invention to provide an improved pneumatic tire and a body ply for manufacturing such a tire.

To this end, the body ply comprises a fabric comprising a cord having a tensile strength of at least 240 N and at most 290 N, preferably at least 245 N and at most 280 N.

In an embodiment, the cord is a textile cord and is composed of multiple, e.g. two or three, plies. It is preferred that each ply is a bundle or yarn of filaments, each ply is twisted around its axis, and two or more plies are twisted together at 300 turns or more per meter, preferably 390 turns per meter, to form the cord.

In an embodiment, the two or more plies each have a mass (in gram per 10,000 m) of 2000 dtex (decitex) or less, preferably 1900 dtex or less, and/or the cord has a diameter of 0,75 mm or less, preferably 0,72 mm or less.

In an embodiment, the cord has a tenacity of at least 7.0 cN/dtex, preferably at least 7.2 cN/dtex, e.g. around 7.5 cN/dtex.

The pneumatic tires of the present invention exhibit a reduced rolling resistance and thus enable reduced CO₂ emissions of vehicles equipped with these tires. Further, the pneumatic tires of the present invention exhibit higher impact resistance (measured with the generally known *plunger test,* e.g. according to the US regulation DOT FMVSS 139), higher burst resistance (i.e. *the measured inflation pressure at which the tire bursts after being extraordinarily inflated until failure),* and/or enable reduced manufacturing costs.

In an embodiment, the cord is made (spun) from a polymer, preferably a polyester, in particular polyethylene terephthalate.

Preferably the cord is made (spun) from a fossil feedstock, recycled, recovered, or bio-based polymer, such as fossil or recycled or recovered, or bio-based polyester, in particular a fossil or recycled or recovered, or bio-based polyethylene terephthalate.

Bio based polyester means that all, or part of, the components are formed from bio-based feedstocks.

In an embodiment, the fabric has an EPDM, *Ends Per DeciMeter* (cords/dm), of 110 or higher, preferably 115 or higher.

In an embodiment, the cords in the fabric form the main reinforcement in the carcass and are held together, forming a fabric, by a warp or weft yarn, e.g. a relatively low dtex and relatively high stretch yarn and/or the cords extend at least substantially radially in the tire, preferably at an angle of 10 degrees or less with respect to the radial direction. Further, it is preferred that the cord specified above forms at least 80% of the weight of the fabric.

In an embodiment, the pneumatic tire comprises an annular tread supported by the toroidal carcass. In an embodiment, the tire comprises a pair of axially spaced beads, the carcass and (thus) the at least one body ply extending from one bead to the other forming and/or supporting the side wall areas of the tire and a tread area of the tire, wherein the (at least one) body ply has been folded (turned up) around the beads, typically from the inside side to the outside side of the walls of the tire.

The invention also relates to a body ply for a pneumatic tire comprising a fabric embedded in rubber layers (a rubberized body ply), the fabric comprising a cord having a tensile strength of at least 240 N and at most 290 N, preferably at least 245 N and at most 280 N.

In an embodiment, the cord has a diameter of 0,75 mm or less, preferably 0,72 mm or less and/or the cord comprises two or more, e.g. two or three, usually twisted plies and/or the two or more plies each have a mass of 2000 dtex (gram per 10,000 m) or less.

In an embodiment, the cord has a tenacity of at least 7.0 cN/dtex, preferably at least 7.2 cN/dtex, most preferably around 7.5 cN/dtex

In an embodiment, the cord is made (spun) from a polymer, preferably a polyester, in particular polyethylene terephthalate.

Preferably the cord is made (spun) from a fossil feedstock, recycled, recovered, or bio-based polymer, such as fossil or recycled or recovered, or bio-based polyester, in particular a fossil or recycled or recovered, or bio-based polyethylene terephthalate.

Bio based polyester means that all, or part of, the components are formed from bio-based feedstocks.

In an embodiment, the fabric has an EPDM, *Ends Per DeciMeter* (cords/dm), of 110 or higher, preferably 115 or higher.

In an embodiment, the body ply has a total gauge, i.e. the thickness of the fabric embedded in rubber layers (rubberized body ply) in mm, of 1,20 mm or less.

Within the framework of the present invention, tensile properties (i.e. the tensile strength) are measured on the twisted cord and in accordance with ASTM D885.

Cord tenacity is calculated by dividing the measured tensile strength of the cord by its mass.

The invention will now be explained in more detail with reference to the drawings, which show a preferred example of the present invention.

### BRIEF DESCRIPTION OF THE DRAWINGS

Figure 1 is a perspective and cross-sectional view of a tire in accordance with the present invention.
Figure 2 shows cross-sections of a body ply in accordance with the present invention and of a comparative example.

### DETAILED DESCRIPTION

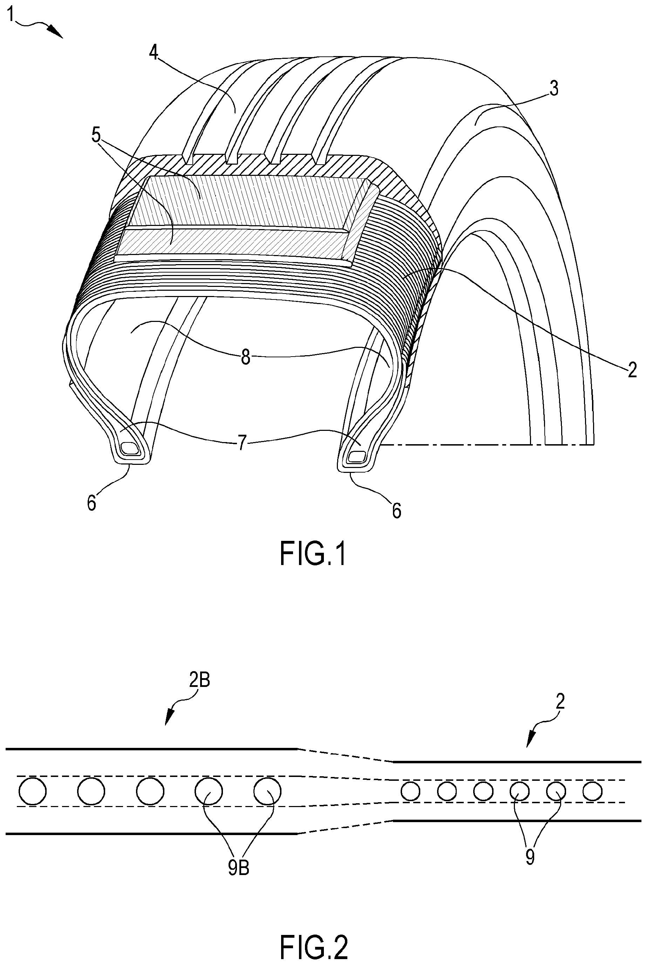

Figure 1 shows a pneumatic tire 1 for a performance vehicle, such as a sports car, comprising a toroidal carcass with at least one body ply 2 supporting side walls 3 and an annular tread 4 of the tire, which tread is further reinforced by a belt package 5, e.g. comprising one or more, e.g. two, steel belts and optionally a cap ply (not shown in Figure 1).

The tire comprises a pair of axially spaced beads 6 and a pair of corresponding bead fillers 7. The body ply extends from one bead to the other and has been folded (turned up) around the beads and bead fillers, typically from the inside side to the outside side of the walls of the tire. The cords extend primarily radially in the tire. An inner liner 8 renders the tire airtight.

Figure 2 shows cross-sections of a body ply 2 in accordance with the present invention and of a body ply 2B as comparative example.

The properties of the cords 9, 9B respectively in the body plies 2, 2B are specified in Table I:

**Table I**

| | Invention | Comparative Ex. |
|---|---|---|
| Cord material | PET | PET |
| Cord Mass (dtex) | 1670 | 2200 |
| Number of plies per cord | 2 | 2 |
| EPDM | 120 | 100 |
| Cord Tensile strength (N) | 250 | 299 |
| Cord Tenacity (cN/dtex) | 7,5 | 6, 8 |
| Cord Turns per meter | 390 | 340 |
| Cord gauge (mm) | 0, 68 | 0,77 |
| Body ply gauge (mm) | 1, 09 | 1,25 |
| Body ply weight (kg/m²) | 1,27 | 1,43 |

Both types of body plies were used in manufacturing 225/40R18 92Y tires, which tires were then tested for rolling resistance, impact resistance (plunger test), and burst strength.

The results are shown in Table II:

**Table II**

| | Invention | Comparative Ex. |
|---|---|---|
| Rolling resistance | 98,9% | 100 % |
| Plunger | 108,8% | 100 % |
| Burst resistance | 101,6% | 100 % |

The results show that the pneumatic tires of the present invention exhibit a substantial reduction of the rolling resistance and thus enable reduced CO2 emissions of vehicles equipped with these tires.

Further, the pneumatic tires of the present example exhibit higher impact resistance and higher burst resistance.

The invention is not restricted to the above-described embodiments, which can be varied in a number of ways within the scope of the claims.

## Claims

1. Pneumatic tire (1), having a toroidal carcass with at least one body ply (2), the at least one body ply (2) comprising a fabric comprising a cord (9), wherein said cord has a tensile strength of at least 240 N and at most 290 N, preferably at least 245 N and at most 280 N.

2. Pneumatic tire (1) according to claim 1, wherein the cord (9) comprises two or more twisted plies.

3. Pneumatic tire (1) according to claim 2, wherein the two or more twisted plies each have a mass of 2000 dtex or less, preferably 1900 dtex or less.

4. Pneumatic tire (1) according to claim 2 or 3 wherein the two or more twisted plies each have the same mass expressed in dtex.

5. Pneumatic tire (1) according to any one of the preceding claims, wherein the cord (9) has a diameter of 0,75 mm or less, preferably 0,72 mm or less.

6. Pneumatic tire (1) according to any one of the preceding claims, wherein the cord (9) has a tenacity of at least 7.0 cN/dtex, preferably at least 7.2 cN/dtex.

7. Pneumatic tire (1) according to any one of the preceding claims, wherein the cord (9) is made from a polymer.

8. Pneumatic tire (1) according to any one of the preceding claims , wherein the polymer is a polyester, in particular polyethylene terephthalate.

9. Pneumatic tire (1) according to any one of the preceding claims, wherein the fabric (2) has an EPDM of 110 or higher, preferably 115 or higher.

10. Body ply (2) for a pneumatic tire (1) comprising a fabric embedded in rubber, the fabric comprising a cord (9) having a tensile strength of at least 240 N and at most 290 N, preferably at least 245 N and at most 280 N.

11. Body ply (2) according to claim 10, wherein the cord (9) comprises two or more twisted plies each having a mass of 2000 dtex or less, preferably 1900 dtex or less

12. Body ply (2) according to claim 10 or 11 wherein the cord (9) has a cord diameter of 0,75 mm or less, preferably 0,72 mm or less and/or wherein the cord (9) has a tenacity of at least 7.0 cN/dtex, preferably at least 7.2 cN/dtex

13. Body ply (2) according to any claim from 10 to 12 wherein the cord (9) is made from a polymer, preferably from a polyester, more preferably from a polyethylene terephthalate.

14. Body ply (2) according to any claim from 10 to 13, wherein the fabric has an EPDM of 110 or higher, preferably 115 or higher.

15. Body ply (2) according to any claim from 10 to 14, having a total gauge of 1,20 mm or less.
